# EUROPEAN PATENT SPECIFICATION

(11) **EP 2 852 201 B1**
(45) Date of publication and mention of the grant of the patent: **25.07.2018**
(21) Application number: 14185664.1
(22) Date of filing: 19.09.2014
(51) Int. Cl.: H04W 12/04, H04W 12/08, H04W 84/12

(54) **Method, device, system and storage medium for controlling access to a router**
Verfahren, Vorrichtung, System und Speichermedium zur Steuerung des Zugangs auf einen Router
Procédé, dispositif, système et support de stockage permettant de contrôler l'accès à un routeur

(30) Priority: 24.09.2013 CN 201310439636
(43) Date of publication of application: 25.03.2015
(73) Proprietor: Xiaomi Inc., Beijing (CN)
(72) Inventor: Fan, Jialin, Haidian District, Beijing (CN); Qu, Heng, Haidian District, Beijing (CN); Yang, Guizhen, Haidian District, Beijing (CN); XIA, Yongfeng, Haidian District, Beijing (CN)
(74) Representative: Hanna Moore + Curley

(56) References cited:
- EP-A2- 2 608 447
- US-A1- 2010 046 486
- US-A1- 2013 198 383
- Anonymous: "Relay network - Wikipedia, the free encyclopedia", , 14 March 1013 (1013-03-14), XP055165851, Retrieved from the Internet: URL:http://en.wikipedia.org/w/index.php?ti tle=Relay_network&oldid=545750025 [retrieved on 2015-01-29]

## Description

### TECHNICAL FIELD

The present disclosure generally relates to the field of communication technology, and more particularly to a method, a device, a system and storage medium for controlling access to a router.

### BACKGROUND

With the development of communication technology and Internet technology, computer networks are ubiquitous, thereby improving information circulation, and enriching and facilitating the people's life.

An important device in the Internet is a router. The router, which is a device used to connect respective local area network devices and wide area network devices in the Internet, can automatically select and set a route according to a channel condition so as to transmit signals in order of sequence in the best path manner. The router functions as a hub and the "traffic police" of the Internet. At present, the router has been applied to every walk of life, and various types of router products have become the main force for establishing an intra-connection in various backbone networks, an inter-connection between backbone networks, and a connection between the backbone network and the Internet. Moreover, as home electronic products increase and Internet function thereof becomes richer, the router is used not only in the public network but further in the home.

It is ordinary for people at home to use a mobile phone to connect to the router via a WIFI connector for access to the Internet. Generally, a password is set for access to the router so as to ensure network security and prevent others from consuming bandwidth. If a friend visits a user and wants to use the user's home WIFI network, the friend has to know the password used for access to the router, and can access the user's home WIFI network only after inputting the password. This is unfriendly to the friend and an inconvenience to operate. European patent application EP2608447 is prior art regarding access control to a wireless router.

### SUMMARY

The present disclosure provides a method, a device, a system and storage medium for controlling access to a router, in accordance with claims which follow, which can improve access efficiency of the router. The invention is defined by the appended claims.

According to a first aspect of the present disclosure, there is provided a method for controlling access to a router, the method includes the following steps of: transmitting a first connection request for establishing a connection using a visitor to a router, and access to the router using the visitor identity, wherein the first connection request comprises a local user identification; receiving indication information transmitted from the router, which indicates that the access is permitted; and transmitting a second connection request for establishing a connection to the router, and access to the router after getting permission, wherein the second connection request comprises the received indication information.

In the embodiment, a terminal device serving as a visitor is connected to a router using a visitor identity to obtain a password, and then is connected to the router using a host identity according to the password. In the process, the user serving as the visitor does not need to manually input the password, so that operation is simplified and efficiency of access to the router is improved.

According to a second aspect of the present disclosure, there is provided a method for controlling access to a router, the method includes the following steps: receiving an access request for accessing a router, wherein the access request comprises a user identification of a device ("an opposite device") which requests access to the router; generating feedback information, which indicates whether to permit the opposite device to access the router, according to the user identification of the opposite device; and transmitting the generated feedback information.

In the embodiment, the terminal serving as the host determines whether to permit the opposite device to access the router according to the user identification in the access request, and returns the feedback information. In this manner, the terminal serving as the host may control the access from the terminal device serving as the visitor to the router, so that the security can be ensured, and when the terminal device serving as the visitor is permitted to access the router, the user serving as the visitor does not need to manually input the password and the access process can be controlled through the router, thereby improving the access efficiency of the router.

The receiving an access request for accessing a router includes: receiving the access request for access to the router transmitted from the router. The transmitting the generated feedback information includes: transmitting the generated feedback information to the router.

Or, the receiving an access request for accessing a router includes: receiving the access request for access to the router transmitted from a server. The transmitting the generated feedback information includes: transmitting the generated feedback information to the server and instructing the server to transmit the feedback information to the router.

In the embodiment, the terminal device serving as the host may be not directly connected to the router but via the server. In this manner, the terminal device serving as the host and the router may be located in different LANs, so as to remotely control the access to the router.

The generating feedback information according to the user identification of the opposite device includes: outputting the prompt information comprising the user identity; receiving an operation instruction with respect to the prompt information; and generating feedback information, which indicates whether to permit the opposite device to access the router, according to the received operation instruction.

In the embodiment, the user identification is output to the user serving as the host, and it is determined by the user that whether to permit the terminal device serving as the visitor to access the router using the host identity, so as to ensure the security.

According to a third aspect of the present disclosure, there is provided a method for controlling access to a router, the method includes the following steps of: receiving a first connection request for establishing a connection using a visitor identity, which is transmitted from a first terminal device, and establish a connection to the first terminal with the visitor identity, wherein the first connection request comprises a user identification of the first terminal device; transmitting an access request for access to the router to a second terminal device with access control permissions, wherein the access request comprises the user identification of the first terminal device; receiving feedback information which is transmitted from the second terminal device and indicates whether to permit an opposite device to access the router; and determining whether the first terminal device is permitted to access the router using a host identity, according to the received feedback information.

In the embodiment, the router is firstly connected to the first terminal with the visitor identity to obtain the user identification of the first terminal device, and transmit the user identification to the second terminal device serving as the host to obtain the permission from the host, i.e., whether to permit the first terminal device to access the router using the host identity. Moreover, the router performs a corresponding process according to the feedback information form the second terminal device serving as the host, thereby ensuring the access security and improving the access efficiency.

The transmitting an access request for access to the router to a second terminal device with access control permissions includes: transmitting, via a server, the access request for access to the router to the second terminal device with access control permissions.

The receiving feedback information transmitted from the second terminal which indicates whether to permit an opposite device to access the router includes: receiving, via the server, feedback information which is transmitted from the second terminal device and indicates whether to permit an opposite device to access the router.

In the embodiment, the terminal device serving as the host may be not directly connected to the router but through the server. In this manner, the terminal device serving as the host and the router may be in different LANs, thereby realizing the remote control of the access to the router.

Before transmitting an access request for access to the router to a second terminal device with access control permissions, the method further includes: detecting whether a connection to the second terminal device has been established.

The transmitting an access request for access to the router to a second terminal device with access control permissions incudes: directly transmitting the access request for access to the router to the second terminal device when the connection to the second terminal device has been established.

The transmitting an access request for access to the router to a second terminal device with access control permissions incudes: transmitting the access request for access to the router to the second terminal device via a server when the connection to the second terminal device has not been established.

In the embodiment of the present disclosure, two connection manners in which the terminal device serving as the host is directly or indirectly connected to the router are compatible, which is suitable for a plurality of application scenarios.

The received feedback information is acknowledgement feedback information, which indicates that the first terminal device is permitted to access the router using the host identity.

The determining whether to permit the first terminal device to access the router using the host identity according to the received feedback information includes: permitting the first terminal device to access the router using the host identity after the acknowledgement feedback information is received.

The method further includes: transmitting a password to the first terminal device after the first terminal device is permitted to access the router using the host identity; and receiving a second connection request for establishing a connection using the host identity, which is transmitted from the first terminal device and includes the password, and establish a connection to the first terminal device.

In the embodiment, the router is configured to transmit the password used in the access to the first terminal device serving as the visitor. The first terminal device may be connected to the router using the host identity according to the password. In this process, the user serving as the visitor does not need to manually input the password, so as to simplify operations and improve the access efficiency of the router.

According to a fourth aspect, there is provided a method for controlling access to a router, the method includes the following steps of: receiving an access request for access to the router transmitted from the router; transmitting the access request to a second terminal device with access control permissions; receiving feedback information which is transmitted from the second terminal device and indicates whether to permit an opposite device to access the router; and transmitting the feedback information to the router and instructs the router to determine whether to permit a first terminal device to access the router using a host identity according to the received feedback information.

In the embodiment, the server functions as a relay point between the router and the second terminal device, thereby realizing the remote control of the second terminal device to the router, and improving the access efficiency of the router.

According to a fifth aspect of the present disclosure, there is provided device for controlling access to a router, the device includes: a first transmission module configured to transmit a first connection request for establishing a connection using a visitor identity to a router, and access to the router using the visitor identity, wherein the first connection request comprises a local user identification; a receiving module configured to receive indication information transmitted from the router, which indicates that the access is permitted; a second transmission module configured to transmit a second connection request for establishing a connection to the router, and access to the router after getting permission, wherein the second connection request comprised the received indication information.

According to a sixth aspect of the present disclosure, there is provided device for controlling access to a router, the device includes: a receiving module configured to receive an access request for access to the router, wherein the access request comprises a user identification of an opposite device which requests for access to the router; a processing module configured to generate feedback information, which indicates whether to permit the opposite device to access the router, according to the user identification; and a transmission module configured to transmit the generated feedback information.

The receiving module is configured to receive the access request for access to the router transmitted from the router, and the transmission module is configured to transmit the generated feedback information to the router.

Or, the receiving module is configured to receive the access request for access to the router transmitted from a server, and the transmission module is configured to transmit the generated feedback information to the server and instruct the server to transmit the feedback to the router.

The processing module includes: an output unit configured to output prompt information comprising the user identification; a receiving unit configured to receive an operation instruction with respect to the prompt information; and a processing unit configured to generate feedback information, which indicates whether to permit the opposite device to access the router, according to the received operation instruction.

According to a seventh aspect of the present disclosure, there is provided device for controlling access to a router, the device includes: a first receiving module configured to receive a first connection request for establishing a connection using a visitor identity transmitted from a first terminal device, and establish a connection to the first terminal device with the visitor identity, wherein the first connection request comprises a user identification of the first terminal device; a first transmission module configured to transmit an access request for access to the router to a second terminal device with access control permissions, the access request including the user identification of the first terminal device; a second receiving module configured to receive feedback information which is transmitted from the second terminal device and indicates whether to permit an opposite device to access the router; and a processing module configured to determine whether to permit the first terminal device to access the router using a host identity, according to the received feedback information.

The first transmission module is configured to transmit, via a server, the access request for access to the router to the second terminal device with the access control permissions.

The second receiving module is configured to receive, via the server, the feedback information, which is transmitted from the second terminal device and indicates whether to permit the opposite device to access the router.

The device further includes: a detection module configured to detect whether a connection to the second terminal device has been established.
the first transmission module includes: a first transmission unit configured to directly transmit the access request for access to the router to the second terminal device with the access control permissions when the connection to the second terminal device has been established; and a second transmission unit configured to transmit, via a server, the access request for access to the router to the second terminal device with the access control permissions when the connection to the second terminal device has not been established.

The received feedback information is acknowledgement feedback information indicating that the first terminal device is permitted to access the router using a host identity.

The processing module is configured to permit the first terminal device to access the router using the host identity, after receiving the acknowledgement feedback information.

the device further includes: a second transmission module configured to transmit a password to the first terminal device after the first terminal device is permitted to access the router using the host identity; and a third receiving module configured to receive a second connection request for establishing a connection as the host, which includes the password, transmitted from the first terminal device, and establish a connection to the first terminal device with identity of the host.

According to an eighth aspect of the present disclosure, there is provided a device for controlling access to a router, the device includes: a first receiving module configured to receive an access request for access to the router transmitted from the router; a first transmission module configured to transmit the received access request to a second terminal device; a second receiving module configured to receive feedback information which is transmitted from the second terminal device and indicates whether to permit an opposite device to access the router; and a second transmission module configured to transmit the received feedback information to the router and instruct the router to determine whether to permit a first terminal device to access the router using a host identity, according to the received feedback information.

According to a ninth aspect of the present disclosure, there is provided a terminal device including a memory, and one or more programs stored in the memory and configured to be performed by one or more processors, the one or more programs including instructions of performing the following operations of: transmitting a first connection request for establishing a connection using a visitor identity and establish a connection to a router using the visitor identity, wherein the first connection request comprises a local user identification; receiving indication information which indicates that the access is permitted, transmitted from the router; and transmitting a second connection request for establishing a connection to the router, and access to the router after getting permission, wherein the second connection request comprises the received indication information.

According to a tenth aspect of the present disclosure, there is provided a terminal device including a memory, and one or more programs stored in the memory and configured to be executable by one or more processors, the one or more programs including instructions of performing the following operations of: receiving an access request for accessing a router, which comprises a user identification of an opposite device which requests for access to the router; generating feedback information, which indicates whether to permit the opposite device to access the router, according to the user identification of the opposite device; and transmitting the generated feedback information.

According to an eleventh aspect of the present disclosure, there is provided a router, including a memory, and one or more programs stored in the memory and configured to be executable by one or more processors, the one or more programs including instructions of performing the following operations of: receiving a first connection request for establishing a connection using a visitor identity, which is transmitted from a first terminal device, and establishing a connection to the first terminal with the visitor identity, wherein the first connection request comprises a user identification of the first terminal device; transmitting an access request for access to the router to a second terminal device with access control permissions, wherein the access request comprises the user identification of the first terminal device; receiving feedback information, which is transmitted from the second terminal device and indicates whether to permit an opposite device to access the router, and determining whether the first terminal device is permitted to access the router using a host identity, according to the received feedback information.

According to a twelfth aspect of the present disclosure, there is provided a server including a memory, and one or more programs stored in the memory and configured to be executable by one or more processors, the one or more programs including instructions of performing the following operations of: receiving an access request for access to the router transmitted from the router; transmitting the access request to a second terminal device; receiving feedback information which is transmitted from the second terminal device and indicates whether to permit an opposite device to access the router; and transmitting the feedback information to the router and instructing the router to determine whether to permit a first terminal device to access the router using a host identity according to the received feedback information.

According to a thirteenth aspect of the present disclosure, there is provided a network system including a first terminal device, a router and a second terminal device.

The first terminal device is configured to transmit a first connection request for establishing a connection using a visitor identity to the router, and access to the router using the visitor identity, wherein the first connection request includes a local user identification, and the first terminal device is further configured to access the router using the host identity when getting permission from the router.

The router is configured to receive the first connection request for establishing a connection using the visitor identity to transmitted from the first terminal device, and establish a connection to the first terminal device with the visitor identity, the first connection request comprising a user identification of the first terminal device; transmit an access request for access to the router, which comprises the user identification of the first terminal device, to a second terminal device with access control permissions; receive feedback information which is transmitted from the second terminal device and indicates whether to permit an opposite device to access the router; and determine whether to permit the first terminal device to access the router using a host identity, according to the received feedback information.

The second terminal device is configured to receive the access request for access to the router comprising the user identification of the opposite device which requests for access to the router; generate feedback information, which indicates whether to permit the first terminal device to access the router, according to the user identification; and transmit the generated feedback information.

Preferably, the network system further includes a server. The server is configured to relay the access request and the feedback information between the router and the second terminal device.

According to a fourth aspect of the present disclosure, there is provided a non-transitory readable storage medium including instructions executable by one or more processors in a terminal and for causing the one or more processors to: transmit a first connection request for establishing a connection using a visitor identity to a router, and access to the router using the visitor identity, wherein the first connection request comprises a local user identification; receive indication information which is transmitted from the second terminal device and indicates that the access is permitted; and transmit a second connection request for establishing a connection to the router, and access to the router after getting permission, wherein the second connection request comprises the received indication information.

Other features and advantages will be illustrated in the following specification, and are partly obvious from the specification or can be known through the implementation of the present disclosure. Objects and other advantages may be achieved and obtained through the specification, claims and structures practically shown in drawings.

Hereinafter, the technical solutions of the present disclosure will be described in detail with reference to the drawings and embodiments.

It is to be understood that both the foregoing general description and the following detailed description are exemplary rather than limiting the present disclosure.

### BRIEF DESCRIPTION OF THE DRAWINGS

The accompanying drawings, which are incorporated in and constitute a part of this specification, illustrate the embodiments according to the present disclosure, and serve as explaining the principles of the present disclosure together with the description, in which:
Fig. 1 is a main flowchart of a process performed at a first terminal device in a process for controlling access to a router, according to an exemplary embodiment.
Fig. 2A is a diagram showing a search result of routers according to an exemplary embodiment.
Fig. 2B is a detailed flowchart of a process performed at a first terminal device in a process for controlling access to a router, according to an exemplary embodiment.
Fig. 3 is a main flowchart of a process performed at a second terminal device in a process for controlling access to a router, according to an exemplary embodiment.
Fig. 4 is a diagram showing prompt information according to an exemplary embodiment.
Fig. 5 is a flowchart of a process if a second terminal device is connected to a router in a process for controlling access to a router, according to an exemplary embodiment.
Fig. 6 is a flowchart of a process if a second terminal device is connected to a server in a process for controlling access to a router, according to an exemplary embodiment.
Fig. 7 is a main flowchart of a process performed at a router in a process for controlling access to a router, according to an exemplary embodiment.
Fig. 8 is a flowchart of a process if a router is connected to a second terminal device in a process for controlling access to a router, according to an exemplary embodiment.
Fig. 9 is a flowchart of a process that the router side is connected to a server in a process for controlling access to a router, according to an exemplary embodiment.
Fig. 10 is a flowchart of a process performed at a server in a process for controlling access to a router, according to an exemplary embodiment.
Fig. 11 is a detailed flowchart of a process if there is not any server in a process for controlling access to a router, according to an exemplary embodiment.
Fig. 12 is a detailed flowchart of a process if there is a server in a process for controlling access to a router, according to an exemplary embodiment.
Fig. 13 is a block diagram illustrating a device 1300 according to an exemplary embodiment.
Fig. 14 is a block diagram illustrating a device 1400 according to an exemplary embodiment.
Fig. 15 is a block diagram illustrating a processing module 1402 according to an exemplary embodiment.
Fig. 16 is a main block diagram illustrating a device 1600 according to an exemplary embodiment.
Fig. 17 is a detailed block diagram illustrating a device 1600 according to an exemplary embodiment.
Fig. 18 is a block diagram illustrating a first transmission module 1602 according to an exemplary embodiment.
Fig. 19 is a detailed block diagram illustrating a device 1600 according to an exemplary embodiment.
Fig. 20 is a block diagram illustrating a device 2000 according to an exemplary embodiment.
Fig. 21 is a block diagram illustrating a terminal device according to an exemplary embodiment.
Fig. 22 is a block diagram illustrating a network device according to an exemplary embodiment.
Fig. 23 is a main block diagram illustrating a network system according to an exemplary embodiment.
Fig. 24 is a detailed block diagram illustrating a network system according to an exemplary embodiment.

The above drawings illustrate specific embodiments of the present disclosure which will be described in detail hereinafter. The drawings and description are not intended to limit the present disclosure in any manner, but describe the concept of the present disclosure for the person skilled in the art with reference to specific embodiments.

### DETAILED DESCRIPTION

To make the objects, solutions and advantages of the present disclosure clearer, reference will now be made in detail to exemplary embodiments, examples of which are illustrated in the accompanying drawings. The following exemplary embodiments and description thereof are intended to illustrate, rather than to limit, the present disclosure. Hereinafter, the present disclosure will be described with reference to the drawings.

In embodiments of the present disclosure, a first terminal device served as a visitor is connected to a router initially using the visitor identity so that the router obtains a user identification of the first terminal device. The router transmits the user identification to a second terminal device serving as a host, so as to interrogate whether to permit the first terminal device to access the router using the host identity. After getting the host's permission, a user serving as the visitor may access to the router using the host identity without performing any operations, thereby simplifying the operation process and improving efficiency of access to the router.

This embodiment mainly relates to the first terminal device serving as a visitor, the router, and the second terminal device serving as a host, and may relate to a server connected between the router and the second terminal device. Hereinafter, firstly an implementation process of controlling access to a router will be described from the above four devices points of view, respectively.

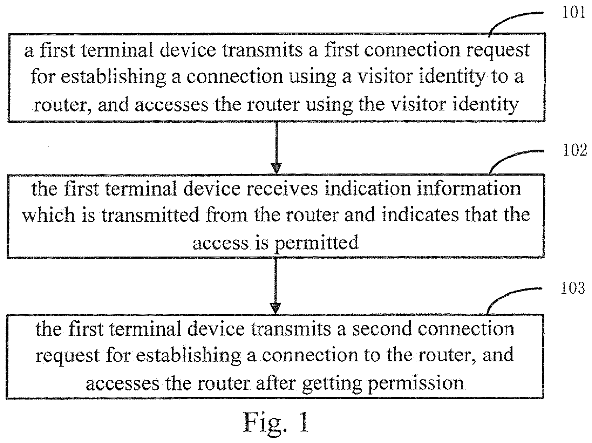

Referring to Fig. 1, a main flow of a method used at the first terminal device in a process for controlling access to a router according to this embodiment is as follows.

At step 101, a first terminal device transmits a first connection request for establishing a connection using a visitor identity to a router, and accesses the router using the visitor identity. The first connection request includes a local user identification. The user identification includes one or more of a terminal device identification, an instant messaging account identification, a Subscriber Identification Module (SIM) card identification and a user name, and further may include user's other information which may be used to identify the user serving as the visitor.

When the first terminal device accesses the router using the visitor identity, this case corresponds that the first terminal device is connected to a visitor (guest) network in the router. In this case, both of access bandwidth and access permission of the first terminal device will be limited, for example, the access bandwidth is 50K and the access permission is limited to only transmit information for identity verification, such as the user identification and the like, to the router or receive corresponding feedback information.

At step 102, the first terminal device receives indication information transmitted from the router, which indicates that the access is permitted. The indication information indicates that the first terminal device is permitted to access the router using the host identity. The indication information may include a password used in access to the router.

At step 103, the first terminal device transmits a second connection request for establishing a connection to the router, and accesses the router after getting permission, wherein the second connection request includes the received indication information. That is, the first terminal device transmits the second connection request for establishing a connection using the host identity to the router, and accesses the router using the host identity.

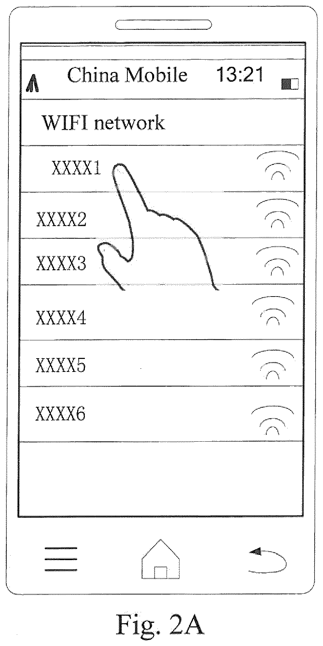

In the embodiment, firstly the first terminal device searches for routers in a network through a WIFI network, and a search result is as shown in Fig. 2A. A first user serving as the visitor clicks an icon of the selected router and the first terminal device is connected to the selected router according to the click commend, i.e., transmits the first connection request for establishing a connection using a visitor identity to the router. Unlike the solution described in the background, the first terminal device can be connected to the router using the visitor identity without inputting any password. The first terminal device transmits a local user identification to the router, using the visitor identity. After being permitted by the host, the first terminal device obtains the indication information from the router, and is connected to the router using the host identity according to the indication information. After the connection is established, the access of the first terminal device to router will be unlimited.

In the whole process of controlling the access, the user only performs an operation of selecting the routers, and does not need to participate in the subsequent connection process, which simplifies the operation process and improves efficiency of the access to the router. Moreover, the user serving as the visitor does not know what the password is in the whole process, which improves the security of the access to the router. The first terminal device does not need to show the user serving as the visitor a input box which prompts the user to input the password, and does not need to wait and respond to the user's operation of inputting the password, which may simplify the processing performed by the first terminal device and may reduce power consumption.

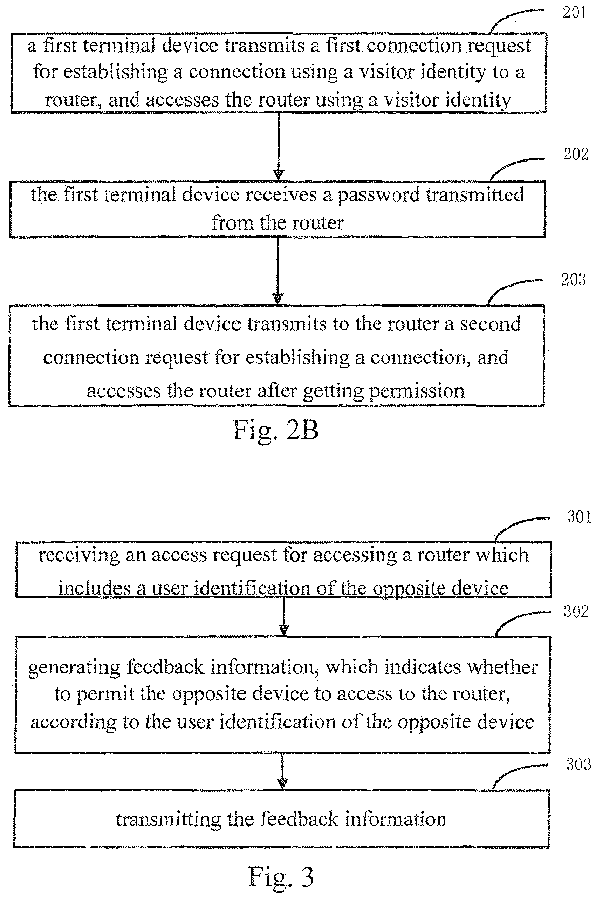

Referring to Fig. 2B, a detailed flow of a process performed at a first terminal device in a process for controlling access to a router is as follows.

At step 201, a first terminal device transmits a first connection request for establishing a connection using a visitor identity to a router, and accesses the router using the visitor identity.

The router transmits the first connection request to a second terminal device with access control permissions (such as a mobile phone as a host). When the second terminal device permits the first terminal devices to access the router, the second terminal device returns feedback information, which indicates that the access is permitted, to the router.

At step 202, the first terminal device receives a password transmitted from the router.

After receiving the above feedback information, the router transmits the password to the first terminal device. The password may be not shown at the first terminal device, and is eliminated when the first terminal device is disconnected from the router.

At step 203, the first terminal device transmits a second connection request for establishing a connection to the router, and accesses the router after getting permission, wherein the second connection request includes the received password.

If the host does not set any password in the router, the first terminal device receives indication information which is a mark identifying that the connection to the router is permitted, by using a visitor identity. The first terminal device can transmit the second connection request carrying the mark. After the mark is identified by the router, the router is reconnected to the first terminal device and opens access permission for the first terminal device.

If the host has set the password in the router, the first terminal device receives indication information, which is the password, transmitted from the router. The first terminal device transmits the second connection request carrying the password. The router verifies the password, and the router is reconnected to the first terminal device and opens access permission for the first terminal device after successful verification.

In the embodiment, because the user serving as the visitor does not need to input the password used in the access to the router, the permission of the user serving as the host is required so as to ensure access security. Hereinafter, an implementation process for a second terminal device serving as a host in a process for controlling access to a router will be described.

Referring to Fig. 3, a main flow of a process performed at a second terminal device in a process for controlling access to a router in the embodiment is as follows.

At step 301, an access request for accessing to a router is received, and the access request includes a user identification of the opposite device which requests access to the router.

At step 302, feedback information, which indicates whether to permit the opposite device to access the router, is generated according to the user identification of the opposite device.

At step 303, the feedback information is transmitted.

If the second terminal device is directly connected to the router, the access request for access to the router transmitted from the router is received at step 301; at step 303, the generated feedback information is transmitted to the router. If the second terminal device is not directly connected to the router but is connected to the router via a server, the access request for access to the router transmitted from the server is received at step 301; at step 303, the generated feedback information is transmitted to the server to instruct the server to transmit the feedback information to the router. The case that the second terminal device is connected to the router via the server is suitable for the scenario that the host is not at home so that it is convenient for the host to remotely control the access of the visitor to the router.

At step 302, there are a plurality of implementation manners, for example, in a manner A1 where the user serving as the host has preset a set of user identifications and permits a terminal device, which corresponds to a user identification included in the set of user identifications, to access the router using the host identity. For example, a user identification in the set of user identifications is the same as a user identification in a "family" group in an address book of the second terminal device. After the second terminal device receives the user identification of the first terminal device (i.e., the "opposite" device), a match is performed between the received user identification and a user identifications in the set of user identifications. If they are matched, acknowledgement feedback information, which indicates that the opposite device is permitted to access the router, is generated; if they are not matched, denial feedback information, which indicates that the opposite device is refused to access the router, is generated. In this manner, the user serving as the host does not need to participate in the above process and the second terminal device may directly perform the match and feedback, thereby improving implementation efficiency.

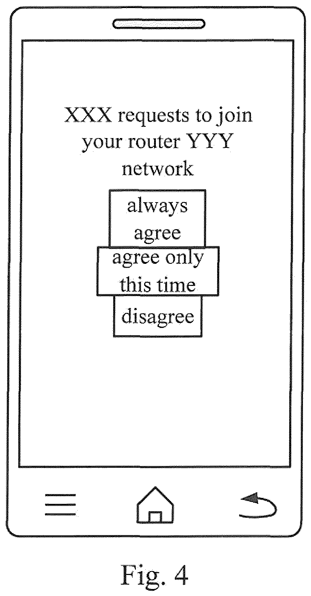

Alternatively, such as in a manner A2, after receiving the user identification of the first terminal device, the second terminal device outputs prompt information including the received user identification to the user serving as the host. For example, the prompt information is "XXX requests to join your router YYY network", as shown in Fig. 4. XXX is the user identification and YYY is a router identification, both of which can be obtained in step 301. As shown in Fig. 4, operation buttons, such as "always agree", "agree only this time" and "disagree", may be output while outputting the prompt information. The user serving as the host may click an operation button to input an operation instruction. Alternatively, the operation instruction of clicking the operation button may be replaced with other gesture instructions, and thus the operation buttons may not be output.

If the user serving as the host clicks the operation button "always agree", the second terminal device receives an operation instruction indicating 'always agree' and generates the acknowledgement feedback information for permitting the access to the router. Meanwhile, the second terminal device records the user identification of the first terminal device. When receiving the user identification next time, the second terminal device will search for the recorded user identifications to determine whether the received user identification has been recorded. If the received user identification has been recorded, it is not required to output the prompt information, and the acknowledgement feedback information may be directly generated. If the received user identification has not been recorded, the prompt information is output. In addition, the manner A2 may be combined with the manner A1, i.e., the user identification is received and then is matched with user identification in the set of user identifications, and if they are not matched, the prompt information is output. When the operation instruction indicating 'always agree' is received, the user identification is recorded in the set of user identifications so as to facilitate match when a user identification is received next time.

If the user serving as the host clicks the operation button "agree only this time", the second terminal device receives an operation instruction indicating 'agree only this time' and generates the acknowledgement feedback information for permitting the access to the router.

If the user serving as the host clicks the operation button "disagree", the second terminal device receives an operation instruction indicating denial and generates the denial feedback information for denying the access to the router.

Hereinafter, the implementation process performed at the second terminal device will be described in detail with reference to two typical embodiments.

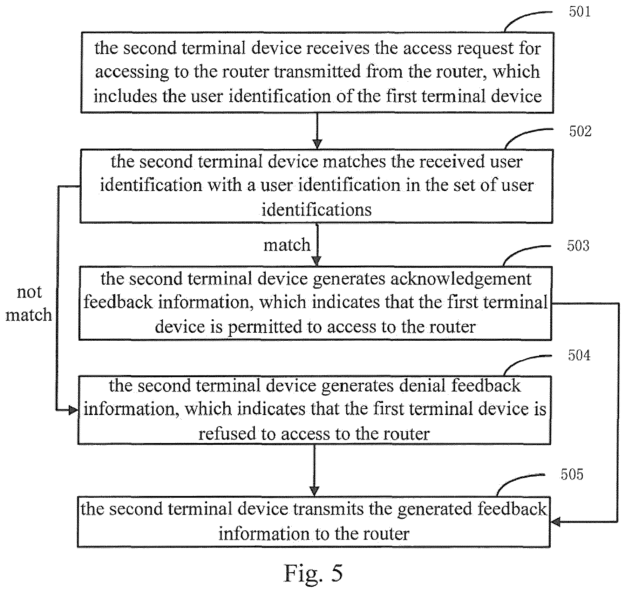

As shown in Fig. 5, a process that a second terminal device is connected to a router in a process for controlling access to a router in the embodiment is as follows.

At step 501, the second terminal device receives the access request for access to the router transmitted from the router, which includes the user identification of the first terminal device.

At step 502, the second terminal device matches the received user identification with a user identification in the set of user identifications. If there is a matched user identification, the process proceeds to step 503; and if there is not a matched user identification, the process proceeds to step 504.

At step 503, the second terminal device generates the acknowledgement feedback information, which indicates that the first terminal device is permitted to access the router. The process proceeds to step 505.

At step 504, the second terminal device generates the denial feedback information, which indicates that the first terminal device is refused to access the router. The process proceeds to step 505.

At step 505, the second terminal device transmits the generated feedback information to the router.

In the embodiment, the second terminal device presets a set of user identifications, and thus may automatically perform match on the received user identification and generates corresponding feedback information. The user serving as the host does not need to participate in the middle process, which simplifies the operation process, improves responding speed to the router and improves operation efficiency.

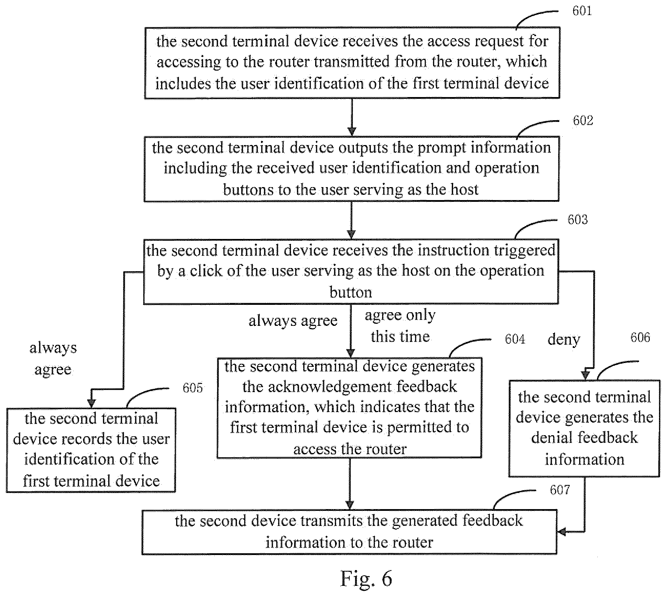

As shown in Fig. 6, a process that a second terminal device side is connected to a router in a process for controlling access to a router is as follows.

At step 601, the second terminal device receives the access request for access to the router transmitted from the router, which includes the user identification of the first terminal device.

At step 602, the second terminal device outputs the prompt information including the received user identification and operation buttons to the user serving as the host.

At step 603, the second terminal device receives the instruction triggered in a manner that the user serving as the host clicks the operation button. If the instruction is an instruction indicating 'agree only this time', the process proceeds to step 604 and step 605. If the instruction is an instruction indicating 'agree only this time', the process proceeds to step 604. If the instruction is an instruction indicating "disagree", the process proceeds to step 606.

At step 604, the second terminal device generates the acknowledgement feedback information, which indicates that the first terminal device is permitted to access the router. The process proceeds to step 607.

At step 605, the second terminal device records the user identification of the first terminal device.

At step 606, the second terminal device generates the denial feedback information, which indicates that the first terminal device is refused to access the router. The process proceeds to step 607.

At step 607, the second terminal device transmits the generated feedback information to the router.

In the embodiment, the second terminal device receives the user identification, and then outputs the prompt information to the user serving as the host so as to get the host's permission. Moreover, three operation instructions are provided, i.e., "always agree", "agree only this time" and "disagree". The "always agree" instruction may be used for a trusted friend, whereby the host does not need to participate in the process when the request from the friend is received next time, which simplifies subsequent operations. The "agree only this time" instruction may be used for an ordinary friend, and the "disagree" instruction may be used for a stranger, so as to ensure security.

This embodiment may be combined with the embodiment shown in Fig. 5, i.e., step 601 is performed firstly, then the step 502 is performed, and the process proceeds to the step 503 if there is a matched user identification; the process proceeds to the steps 602-606 if there is not a matched user identification. The step 607 is performed following the steps 503 and 606.

Respective implementation processes of the first and second terminal devices are described above. Regardless of the first terminal device or the second terminal device, the object thereof is to control access to the router, and thus the participation of the router is necessary. Hereinafter, the implementation processes of the router will be described.

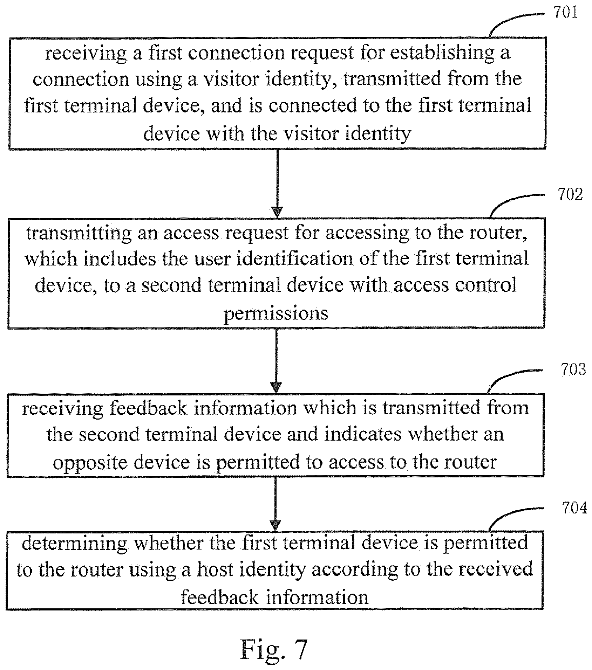

As shown in Fig. 7, a main process performed at a router in a process for controlling access to a router in the embodiment is as follows.

At step 701, the router receives a first connection request for establishing a connection using a visitor identity transmitted from the first terminal device, and is connected to the first terminal device with the visitor identity, wherein the first connection request includes a user identification of the first terminal device.

At step 702, an access request for access to the router, which includes the user identification of the first terminal device, is transmitted to a second terminal device with access control permissions.

At step 703, feedback information which is transmitted from the second terminal device and indicates whether an opposite device is permitted to access the router, is received.

At step 704, it is determined whether the first terminal device is permitted to the router using a host identity, according to the received feedback information.

In the embodiment, firstly the router permits the first terminal device to perform a connection using the visitor identity, thereby permitting the first terminal device to access the network by limiting the access permission and bandwidth of the first terminal device and the like. In a case of limiting the access permission, the router may obtain the user identification of the first terminal device from the first terminal device, and perform a simple communication with the first terminal device. The router transmits the access request to the second terminal device to ask whether the user serving as the host permits the first terminal device to access the router using the host identity, and performs a corresponding process according to the feedback information from the second terminal device, whereby the access control to the first terminal device is realized.

When the feedback information is received, the router transmits indication information indicating permission to the first terminal device; and opens the access control permissions, bandwidth and the like for the first terminal device after a feedback from the first terminal device is received. If denial feedback information is received, the router transmits indication information indicating denial of the first terminal device, and terminates the connection to the first terminal device. For security purposes, when the first terminal device is permitted to access the router using the host identity, since the router cannot automatically change the identity of the first terminal device, it is required that the first terminal device transmits a connection request again (i.e., to transmit a second connection request), and then the router changes the identity of the first terminal device according to the second connection request and opens a corresponding access permission and bandwidth.

The router may be directly connected to the second terminal device, and thus the process proceeds to the steps 702 and 703. The router may be connected to the second terminal device via a server; and in this case, at step 702, an access request for access to the router to the second terminal device is transmitted through the server and at step 703, feedback information which indicates whether the opposite device is permitted to access the router is transmitted through the server. The above two manners may be combined together, i.e., after receiving the first connection request from the first terminal device, the router detects whether the connection to the second terminal device has been established; if the connection to the second terminal device has been established, the router directly transmits the access request for access to the router to the second terminal device; and if the connection to the second terminal device has not been established, the router transmits the access request for access to the router to the second terminal device through the server. A device identification of the second terminal device may be preset in the router, and the router may detect whether there is the second terminal device in the connected devices according to the device identification.

At step 704, when the router receives acknowledgement feedback information, the router permits the first terminal device to access the router using the host identity, and transmits to the first terminal device indication information which indicates that the first terminal device is permitted to perform connection using the host identity; the router receives the second connection request for establishing a connection using the host identity, which is transmitted from the first terminal device and includes the indication, and is connected to the first terminal device with the host identity. If the router is provided a password, the indication is the password. The router permits the first terminal device to access the router using the host identity, and then transmits the password to the first terminal device; the router receives the second connection request for establishing a connection using the host identity which is transmitted from the first terminal device and includes the password, and is connected to the first terminal device with the host identity. The use of the password may improve the security, and it is not required to output the password to the visitor in the whole process, and the interactive process with the router is implemented in the interior of the first terminal device.

There are a plurality of the above implementations at the router. Hereinafter, the implementation will be described in detail through two typical embodiments.

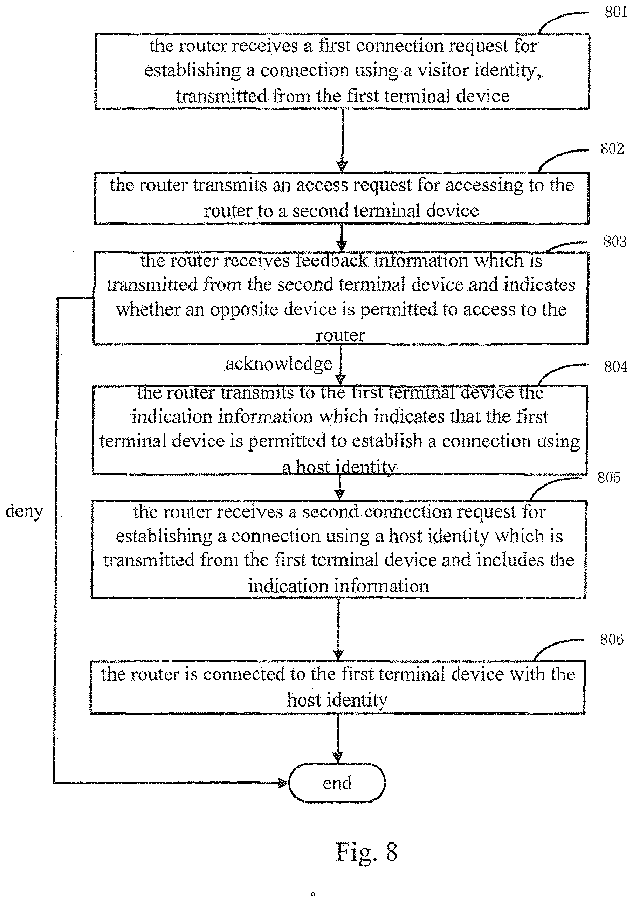

As shown in Fig. 8, a process in which a router side is connected to a second terminal device in a process for controlling access to a router is as follows.

At step 801, the router receives a first connection request for establishing a connection using a visitor identity, which is transmitted from the first terminal device, and is connected to the first terminal device with the visitor identity, wherein the first connection request includes a user identification of the first terminal device.

At step 802, the router transmits to a second terminal device an access request for access to the router, which includes the user identification of the first terminal device.

At step 803, the router receives feedback information which is transmitted from the second terminal device and indicates whether an opposite device is permitted to access the router. If acknowledgement feedback information is received, the process proceeds to step 804; if denial feedback information is received, the process ends, or the router transmits indication information for denying the connection to the first terminal device and is disconnected from the first terminal device.

At step 804, the router transmits to the first terminal device the indication information which indicates that the first terminal device is permitted to perform connection using a host identity. The indication is an instruction mark and is suitable for the case that no password is provided to the router.

At step 805, the router receives a second connection request for establishing a connection as a host, which includes the indication, transmitted from the first terminal device.

At step 806, the router is connected to the first terminal device with the host identity.

In the embodiment, the case in which the router is directly connected to the second first terminal device is suitable for the scenario in which the first and second terminal devices are located in a same LAN. The router receives the acknowledgement feedback information transmitted from the second terminal device, then transmits the instruction information to the first terminal device so that the first terminal device initiates the process of changing identity thereof, and then is reconnected to first terminal device and opens the access permission and bandwidth for the first terminal device, thereby ensuring the security and improves access control efficiency.

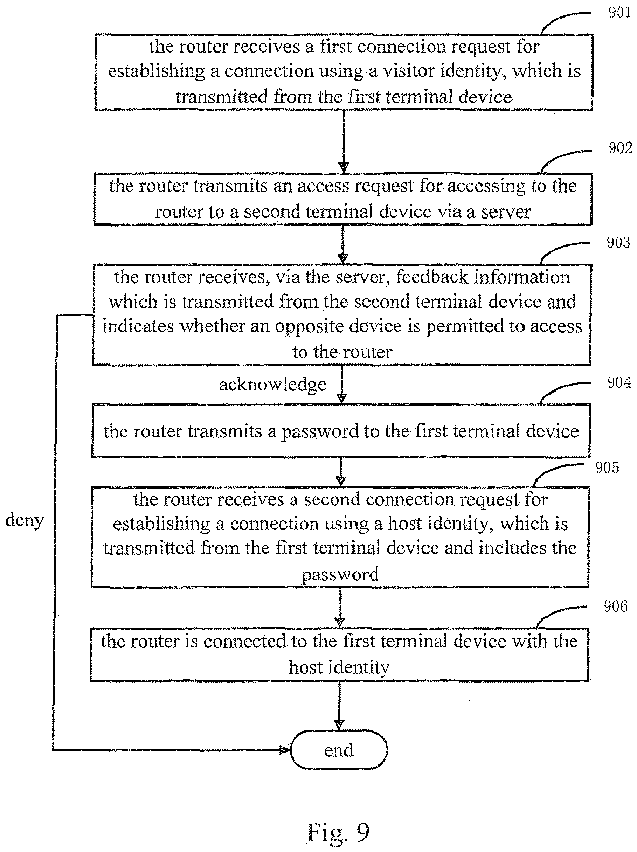

As shown in Fig. 9, a process in which the router side is connected to a server in a process for controlling access to a router in the embodiment is as follows.

At step 901, the router receives a first connection request for establishing a connection using a visitor identity which is transmitted from the first terminal device, and is connected to the first terminal device serving using the visitor identity, wherein the first connection request includes a user identification of the first terminal device.

At step 902, the router transmits to a second terminal device via a server an access request for access to the router, which includes the user identification of the first terminal device.

At step 903, the router receives, through the server, feedback information which is transmitted from the second terminal device and indicates whether an opposite device is permitted to access the router. If acknowledgement feedback information is received, the process proceeds to step 904; if denial feedback information is received, the process ends, or the router transmits indication information for denying connection to the first terminal device and is disconnected from the first terminal device.

At step 904, the router transmits a password to the first terminal device.

At step 905, the router receives a second connection request for establishing a connection using a host identity, which is transmitted from the first terminal device and includes the password.

At step 906, the router is connected to the first terminal device with the host identity.

In the embodiment, the case that the router is directly connected to the second first terminal device is suitable for the scene that the first and second terminal devices are located in different LANs and may facilitate the second terminal device to implement the remote control and may reduce limitations due to distance and area. The router receives the acknowledgement feedback information transmitted from the second terminal device, then transmits the password to the first terminal device so that the first terminal device starts the process of changing identity, and then is reconnected to first terminal device and opens the access permissions and bandwidth to the first terminal device. By the use of the password, the security may be further improved while access control efficiency is improved.

The router can be connected to the second terminal device through the server, and thus the process for controlling the router is not related to the server. Hereinafter, the process performed at the server will be described.

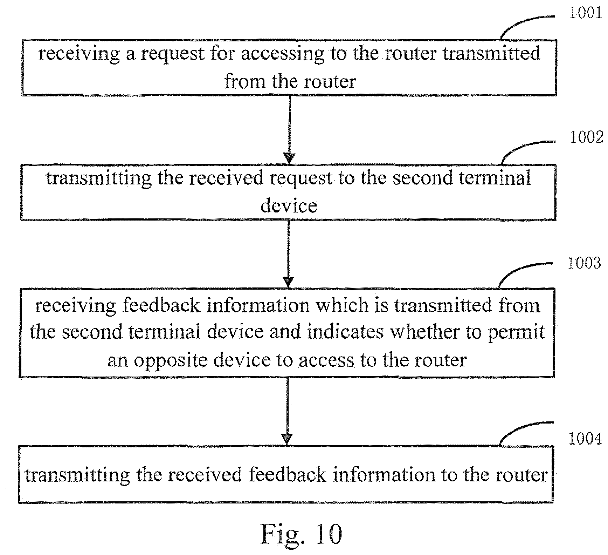

As shown in Fig. 10, a process performed at a server in a process for controlling access to a router in the embodiment is as follows.

At step 1001, the server receives a request for access to the router transmitted from the router.

At step 1002, the server transmits the received request to the second terminal device.

At step 1003, the server receives feedback information which is transmitted from the second terminal device and indicates whether to permit an opposite device to access the router.

At step 1004, the server transmits the received feedback information to the router, and instructs the router to determine whether to permit the first terminal device to access the router using a host identity according to the received feedback information.

The server functions as a relay point between the router and the second terminal device, which may facilitate the second terminal device to implement the remote control and reduce geographical restriction.

The above embodiments describe the processes for controlling access to the router only from each device of view. Hereinafter, the process for controlling the router will be described in combination with respective devices.

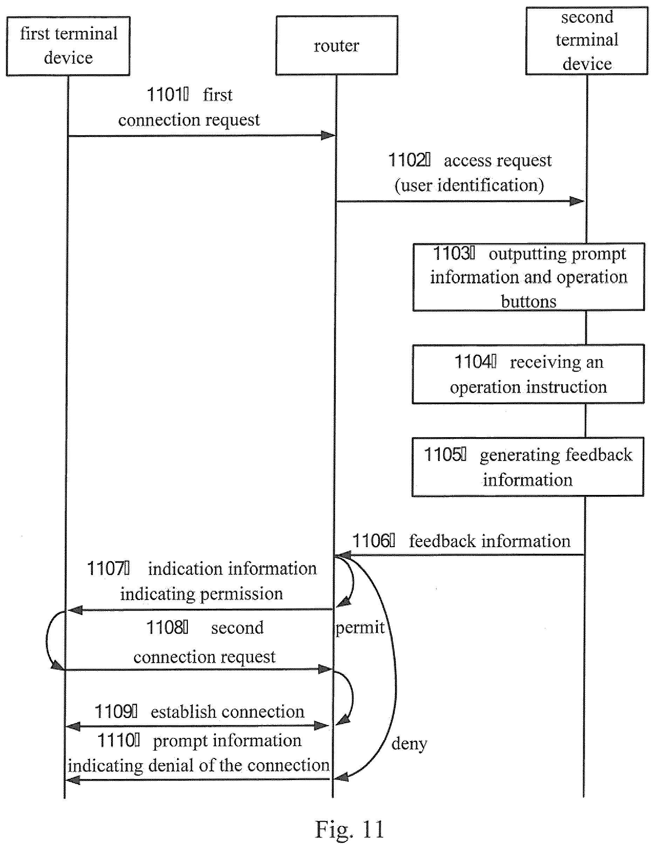

As shown in Fig. 11, a detailed process in which there is not any server in a process for controlling access to a router in the embodiment is as follows.

At step 1101, a first terminal device transmits a first connection request to a router and accesses the router using a visitor identity.

At step 1102, the router transmits an access request including a user identification of the first terminal device to a second terminal device.

At step 1103, the second terminal device outputs prompt information and operation buttons to a user serving as a host. The prompt information includes the received user identification.

At step 1104, the second terminal device receives an instruction triggered in manner that the user serving as the host clicks an operation button.

At step 1105, the second terminal device generates corresponding feedback information according to the triggered instruction.

At step 1106, the second terminal device transmits the feedback information to the router. If the feedback is acknowledgement feedback information, the process proceeds to step 1107; and if the feedback is denial feedback information, the process proceeds to step 1110.

At step 1107, the router transmits to the first terminal device indication information, which indicates that the first terminal device is permitted to perform a connection using the host identity.

At step 1108, the first terminal device transmits a second connection request for establishing a connection to the router, and accesses the router after getting permission.

At step 1109, the router is connected to the first terminal device with the host identity.

At step 1110, the router transmits indication for denying connecting to the first terminal device.

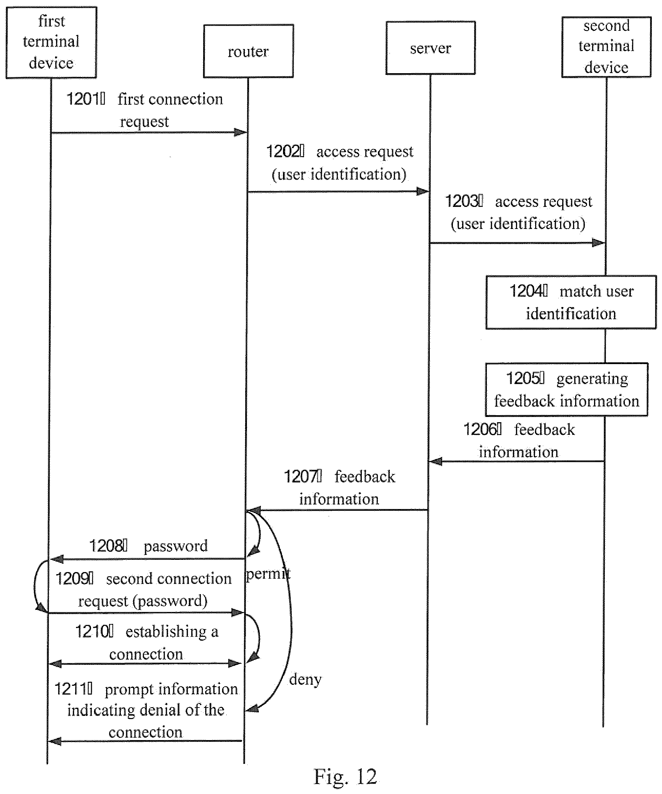

As shown in Fig. 12, a detailed process in which there is a server in a process for controlling access to a router in the embodiment is as follows.

At step 2101, a first terminal device transmits a first connection request to a router and accesses the router using a visitor identity.

At step 1202, the router transmits an access request including a user identification of the first terminal device to a server.

At step 1203, the server transmits an access request including the user identification of the first terminal device to a second terminal device.

At step 1204, the second terminal device matches the received identity with a user identification in a set of user identifications.

At step 1205, the second terminal device generates feedback information, which indicates whether to permit an opposite device to access the router, according to the user identification of the opposite device.

At step 1206, the second terminal device transmits the generated feedback information to the server.

At step 1207, the server transmits the received feedback information to the router. If the feedback is acknowledgement feedback information, the process proceeds to step 1208; and if the feedback is denial feedback information, the process proceeds to step 1211.

At step 1208, the router transmits a password to the first terminal device.

At step 1209, the first terminal device transmits a second connection request including the password to the router, and accesses the router using a host identity.

At step 1210, the router is connected to the first terminal device with identity of the host.

At step 1211, the router transmits indication for denying a connection to the first terminal device

Before steps 1102 and 1202, the router detects whether a connection to the second terminal device has been established; if the connection to the second terminal device has been established, the process proceeds to step 1102 and subsequent steps; if the connection to the second terminal device has not been established, the process proceeds to step 1202 and subsequent steps.

The implementation process for controlling access to the router is described through the above embodiments. The process relates to four devices, the internal structure and functions of which will be described hereinafter. The four devices may constitute a system, and the internal structure and functions of the system will be further described hereinafter.

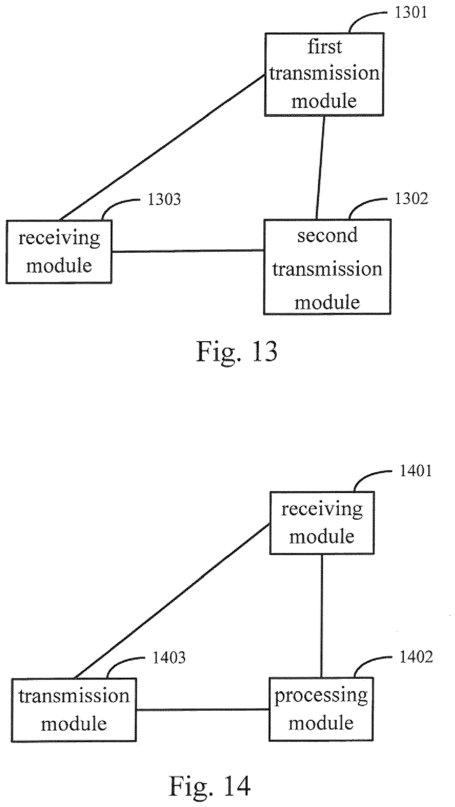

As shown in Fig. 13, a device 1300 (i.e., a first terminal device) for controlling access to a router in the embodiment includes: a first transmission module 1301, a receiving module 1302 and a second transmission module 1303.

The first transmission module 1301 is configured to transmit to a router a first connection request for establishing a connection using a visitor identity, and access to the router using the visitor identity, wherein the first connection request includes a local user identification.

The receiving module 1302 is configured to receive indication information transmitted from the router, which indicates that the access is permitted.

The second transmission module 1301 is configured to transmit to the router a second connection request for establishing a connection, and access to the router after getting permission, wherein the second connection request includes the received indication information.

As shown in Fig. 14, a device 1400 (i.e., a second terminal device) for controlling access to a router in the embodiment includes: a receiving module 1401, a processing module 1402 and a transmission module 1403.

The receiving module 1401 is configured to receive an access request for access to the router, the access request including a user identification of an opposite device which requests for access to the router.

The processing module 1402 is configured to generate feedback information, which indicates whether to permit the opposite device to access the router, according to the user identification.

The transmission module 1403 is configured to transmit the generated feedback information.

In the embodiment, the receiving module 1402 receives the access request for access to the router transmitted from the router; the transmission module 1403 transmits the generated feedback information to the router. Alternatively, the receiving module 1402 receives the access request for access to the router transmitted from a server; the transmission module 1403 transmits the generated feedback information to the server and instructs the server to transmit the feedback information to the router.

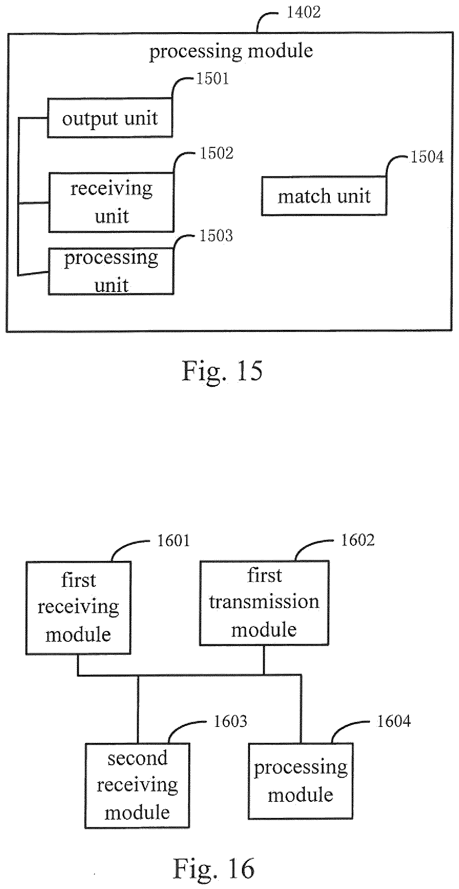

As shown in Fig. 15, the processing module 1402 includes an output unit 1501, a receiving unit 1502 and a processing unit 1503.

The output unit 1501 is configured to output prompt information including the user identification.

The receiving unit 1502 is configured to receive an operation instruction with respect to the prompt information.

The processing unit 1503 is configured to generate feedback information, which indicates whether to permit the opposite device to access the router, according to the received operation instruction. If the operation instruction indicates 'always agree', the receiving unit 1503 generates acknowledge feedback information, which indicates that the first terminal device is permitted to access the router, and records the user identification of the first terminal device. If the operation instruction indicates 'agree only this time', the receiving unit 1503 generates acknowledge feedback information, which indicates that the first terminal device is permitted to access the router. If the operation instruction indicates denial, the receiving unit 1503 generates denial feedback information, which indicates the first terminal device is refused to access the router.

The processing module 1402 may further include a match unit 1504. The match unit 1503 is configured to match the received user identification with a user identification in a set of user identifications. If there is a matched user identification, the match unit 1503 is configured to generate acknowledge feedback information, which indicates that the first terminal device is permitted to access the router. If there is not any matched user identification, the match unit 1503 is configured to generate denial feedback information, which indicates the first terminal device is refused to access the router.

The device 1300 and the device 1400 may be a same device, or they may just play different roles under different scenarios. That is, a device may include all of modules in the devices 1300 and 1400

As shown in Fig. 16, a device 1600 (i.e., a router) for controlling access to a router in the embodiment includes a first receiving module 1601, a first transmission module 1602, a second receiving module 1603 and a processing module 1604.

The first receiving module 1601 is configured to receive a first connection request for establishing a connection to a router using a visitor identity, which is transmitted from a first terminal device, and establish a connection to the first terminal device with the visitor identity, wherein the first connection request includes a user identification of the first terminal device.

The first transmission module 1602 is configured to transmit an access request for access to the router to a second terminal device with access control permissions, the access request including the user identification of the first terminal device.

The second receiving module 1603 is configured to receive feedback information which is transmitted from the second terminal device and indicates whether to permit an opposite device to access the router.

The processing module 1604 is configured to determine whether to permit the first terminal device to access the router using a host identity, according to the received feedback information.

In the embodiment, the first transmission module 1602 transmits, via the server, the access request for access to the router to the second terminal device with the access control permissions; and the second receiving module 1603 receives, via the server, the feedback information, which is transmitted from the second terminal device and indicates whether to permit the opposite device to access to the route.

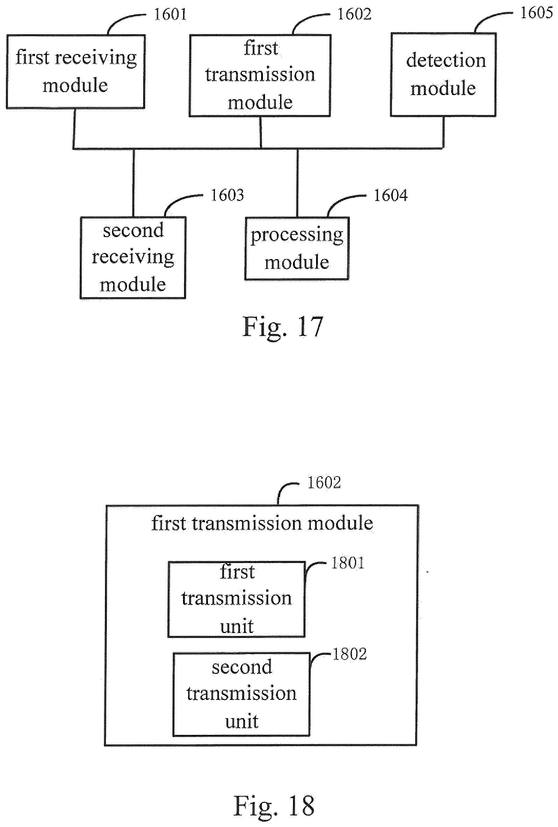

As shown in Fig. 17, the device 1600 further includes a detection module 1605 configured to detect whether a connection to the second terminal device has been established.

As shown in Fig. 18, the first transmission module 1602 includes a first transmission unit 1801 and a second transmission unit 1802.

The first transmission unit 1801 is configured to directly transmit the access request for access to the router to the second terminal device with the access control permissions when the connection to the second terminal device has been established.

The second transmission unit 1802 is configured to transmit the access request for access to the router to the second terminal device with the access control permissions via the server when the connection to the second terminal device has not been established.

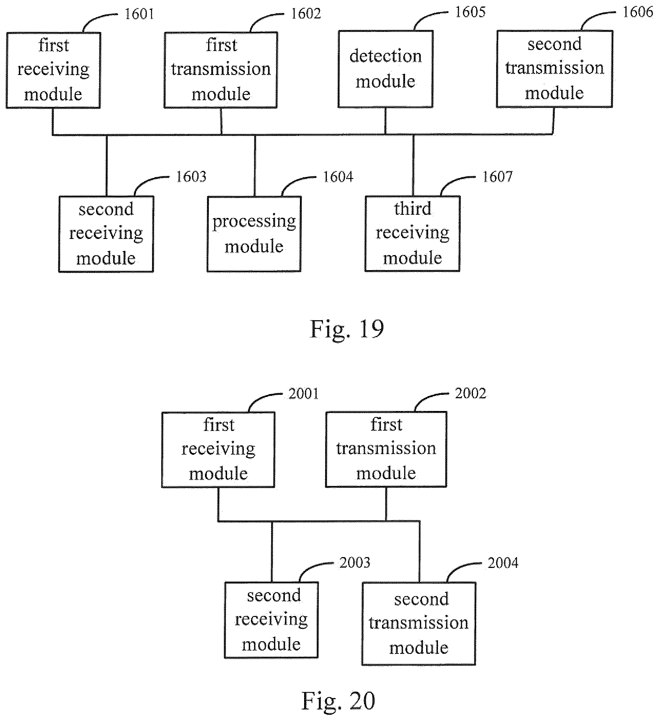

If the received feedback information is acknowledgement feedback information indicating that the first terminal device is permitted to access the router using the host identity, the processing module 1604 permits the first terminal device to access the router using the host identity. As shown in Fig. 19, the device 1600 further includes a second transmission module 1606 and a third receiving module 1607.

The second transmission module 1606 is configured to transmit a password to the first terminal device after the first terminal device is permitted to access the router using the host identity.

The third receiving module 1607 is configured to receive a second connection request for establishing a connection using the host identity which is transmitted from the first terminal device and includes the password, and establish a connection to the first terminal device with the host identity.

As shown in Fig. 20, a device 2000 (i.e., a server) for controlling access to a router in the embodiment includes: a first receiving module 2001, a first transmission module 2002, a second receiving module 2003 and a second transmission module 2004.

The first receiving module 2001 is configured to receive an access request for access to the router transmitted from the router.

The first transmission module 2002 is configured to transmit the received access request to a second terminal device.

The second receiving module 2003 is configured to receive feedback information which is transmitted from the second terminal device and indicates whether to permit an opposite device to access the router.

The second transmission module 2004 is configured to transmit the received feedback information to the router, and instruct the router to determine whether to permit a first terminal device to access the router using a host identity, according to the received feedback information.

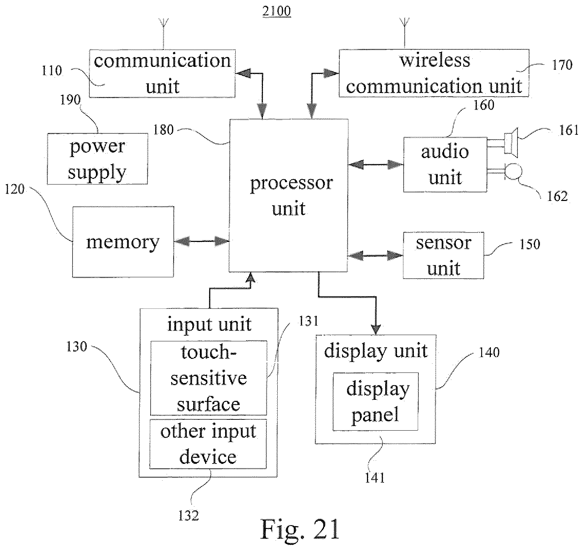

The present disclosure further provides a terminal device. Fig. 21 is a block diagram of a terminal device according to an embodiment. The terminal device may be used to perform a method for controlling access to a router described in the above embodiments. Preferably, a hardware environment of a browser, which supports running of client terminal scripting or supports Hypertext Markup Language 5 (HTML5) specification proposed by World Wide Web Consortium (W3C), is taken for an example.

The terminal device may include a communication unit 110, a memory 120 including one or more computer readable storage mediums, an input unit 130, a display unit 140, a sensor unit 150, an audio unit 160, a wireless communication unit 170, a processor unit 180 including one or more processors, a power supply and so on. The person skilled in the art should appreciate that the structure of the terminal device as shown in Fig. 21 is not intended to limit the terminal device which may include more or less components or combine some components or other different components.

The communication unit 110 is configured to transmit or receive information or to transmit or receive information in a communication process. The communication unit 110 may be a Radio Frequency (RF) circuit, a router, a modem and the like. Particularly, if the communication unit 110 is a RF circuit, the communication unit 110 receives downlink information from the base station and the received information is processed by one or more processor 180; and, the communication unit 110 transmits uplink data to the base station. In general, the RF circuit serving as the communication component includes, but not limited to, an antenna, at least one amplifier, a tuner, one or more oscillator, a SIM card, a transceiver, a coupler, a Low Noise Amplifier (LNA), a duplexer and the like. Additionally, the communication unit 110 may communicates with other device through wireless communication and a network. The wireless communication may adopt any one communication standard or protocol including, but not limited to, Global System of Mobile communication (GSM), General Packet Radio Service (GPRS), Code Division Multiple Access (CDMA), Wideband Code Division Multiple Access (WCDMA), Long Term Evolution (LTE), email, Short Messaging Service (SMS) and the like. The memory 120 may be configured to store programs and modules. The processor 180 may perform various functions and data processing by operating programs and modules stored in the memory 120. The memory 120 may mainly include a program storage area and a data storage area. The program storage area may store an operating system, an application for at least one function (such as a function of playing audio, a function of playing photos and the like) and the like. The data storage area may store data (such as audio data, a phone book and the like) created according to usage of the terminal device 2100 and the like. In addition, the memory 120 may include a high speed random access memory, a nonvolatile memory, for example at least one disk memory, a flash memory or other volatile solid-state memory. Accordingly, the memory 120 may include a memory controller to provide access to the memory 120 for the processor 180 and the input unit 130.

The input unit 130 may be configured to receive inputted digits information or character information, and to generate keyboard signal input, mouse signal input, joystick signal input, optical signal input or trackball signal input which are related to user set and functional control. Optionally, the input unit 130 may include a touch-sensitive surface 131 and other input device 132. The touch-sensitive surface 131, further known as a touch screen or a touch pad, may collect touch action performed thereon or around by the user (such as an action performed on the touch-sensitive 131 or around by the user using any suitable object such as a finger or a touch pen), and activate corresponding connection device according to a preset program. Alternatively, the touch-sensitive surface 131 may include two parts, i.e., a touch detecting device and a touch controller. The touch detecting device detects a location touched by the user and a signal generated from the touch action, and transmits the signal to the touch controller. The touch controller receives touch information from the touch detecting device and converts it into the touch point coordinates, and then transmits the coordinates to the processor 180 and receives and performs instructions from the processor 180. Additionally, the touch-sensitive surface 131 may be realized as various types of touch-sensitive surface, such as a resistive touch-sensitive surface, a capacitive touch-sensitive surface, an infrared touch-sensitive surface and a surface acoustic wave touch-sensitive surface and the like. In addition to the touch-sensitive surface 131, the input unit 130 may further include other input device 132. Optionally, the other input device 132 may include, but is not limited to, one or more of a physical keyboard, function buttons (such as a volume control button, a switch button and the like), a trackball, a mouse, a joystick.

The display unit 140 may be configured to display various kinds of graphic user interfaces of information input by the user or provided to the user or the terminal device 2100. These graphic user interfaces may be made up of graphics, texts, icons, videos and any other combination thereof. The display unit 140 may include a display panel 141; optionally, LCD (Liquid Crystal Display), OLED (Organic Light-Emitting Diode) or the like may be used to assemble the display panel 141. Furthermore, the touch sensitive surface 131 may be configured to cover the display panel 141. When the touch operation performed on or near the touch sensitive surface 131 is detected, the touch sensitive surface 131 may transmit signals to the processor 180 to determine the type of the touch event, and then the processor 180 may provide a corresponding visual output on the display panel 141 according to the type of the touch event. In Figure 21, although the touch sensitive surface 131 and the display panel 141 serves as two independent components to realize the input and output functions, they can be integrated together in some embodiments to realize the input and output functions.

The terminal device 2100 may further include at least one sensor 150 such as a photo sensor, a motion sensor and other sensors. For example, the photo sensor may include an ambient light sensor and a proximity sensor. The ambient light sensor may adjust brightness of the display panel 141 according to intensity of the ambient light. The proximity sensor may close the display panel 141 and/or backlight when the terminal device 2100 is close to the user's ear. As one type of motion sensors, a gravitational acceleration sensor may detect values of accelerations in various directions (usually three axes), and may detect a value and a direction of the gravitation when resting, and may be used in an application for identifying a mobile phone pose (such as switching between a landscape mode and a vertical mode, corresponding games, pose adjusting with a magnetometer), functions related to vibration (such as a pedometer, knocking) and the like. Other sensors such as a gyroscope, a barometer, a humidity meter, a thermometer, an infrared sensor and the like which may be arranged in the terminal device 2100 will not be described in detail.

The audio circuit 160, a speaker 161, a microphone 162 may provide an audio interface between the user and the terminal device 2100. The audio circuit 160 may convert the received audio data into electronic signals and transmit the electronic signals to the speaker 161, and the speaker 161 may convert the electronic signals into voice and output the voice. Additionally, the microphone 162 may convert the collected voice signals into electronic signals; the audio circuit 160 receives the electronic signals and converts them into audio data; and the audio data is transmitted to the processor 180 and then is transmitted to another terminal device through the communication unit 110 after processed by the processor; or the audio data is transmitted to the memory 120 to be further processed. The audio circuit 160 may further include an earplug jack to allow a communication between a peripheral earphone and the terminal device 2100.

In order to realize wireless communication, the terminal device may be provided with a wireless communication 170. The wireless communication 170 may be a WIFI module. WIFI is a kind of short distance wireless communication technology. The terminal device 2100 may help the user to transmit or receive E-mail, browse web pages and access streaming media and the like through the wireless communication unit 170, which provides the user the wireless broadband internet access. Although the wireless communication unit 170 is shown in Fig. 21, it should be understood that the wireless communication unit 170 is not a necessary component for the terminal device 2100, and may be omitted according to requirements within the scope without changing the substance of the present disclosure.

The processor 180 is a control center of the terminal device 2100, and connects respective portions of the whole client computer by using various interfaces and wires. By running or executing software programs and/or modules stored in the memory 120, calling data stored in the memory 120, and executing various functions of the terminal device 2100 and processing data, the processor 180 performs overall monitoring to the mobile terminal. Optionally, the processor 180 may include one or more processing cores. Optionally, the processor 180 may integrate application processors and modem processors, wherein the application processors may mainly process the operation systems, the user interfaces, the application programs and the like, and the modem processors may mainly process wireless communications. It should be understood that the above modem may not be integrated into the processor 180.

The terminal device 2100 may further include the power supply 190 (for example, a battery) to supply power to respective component. Optionally, the power supply may be logically connected with the processor 180 through a power supply management system, thereby realizing functions of managing charging, discharging, power consumption, and the like, through the power supply management system. The power supply 190 may further include arbitrary components such as one or more DC or AC power supplies, a rechargeable system, a power supply malfunction detection circuit, a power supply converter or an inverter, a power supply state indicator and the like.

Although not shown, the terminal device 2100 may further include a camera, a Bluetooth module and so on, which will be not described in detail. In this embodiment, the terminal device may browser webpage through a browser, and the terminal device further includes a processor and one or more programs, wherein the one or more programs are stored in the memory and configured to be executable by one or more processors, and the one or more programs include instructions of performing the following operations of:
transmitting a first connection request for establishing a connection using a visitor identity to a router, and access to the router using the visitor identity;
receiving indication information transmitted from the router, which indicates that the access is permitted; and
transmitting a second connection request for establishing a connection to the router, and access to the router after getting permission, wherein the second connection request includes the received indication information.

Alternatively, the memory includes instructions of performing the following operations of:
receiving an access request for access to the router, wherein the access request includes a user identification of the opposite device which requests for access to the router;
generating feedback information, which indicates whether to permit the opposite device to access the router, according to the user identification of the opposite device; and
transmitting the generated feedback information.
The memory may further include instructions of performing the following operations:
the receiving a request for access to the router includes: receiving the access request for access to the router transmitted from the router; and the transmitting the generated feedback information includes: transmitting the generated feedback information to the router; or
the receiving an access request for access to the router includes: receiving the access request for access to the router transmitted from a server; and the transmitting the generated feedback information includes: transmitting the generated feedback information to the server and instructing the server to transmit the feedback information to the router.

The memory may further include instructions of performing the following operations of: generating feedback information, which indicates whether to permit the opposite device to access the router, according to the user identification of the opposite device; outputting prompt information including the user identification; receiving an operation instruction with respect to the prompt information; and generating feedback information, which indicates whether to permit the opposite device to access the router, according to the received operation instruction.

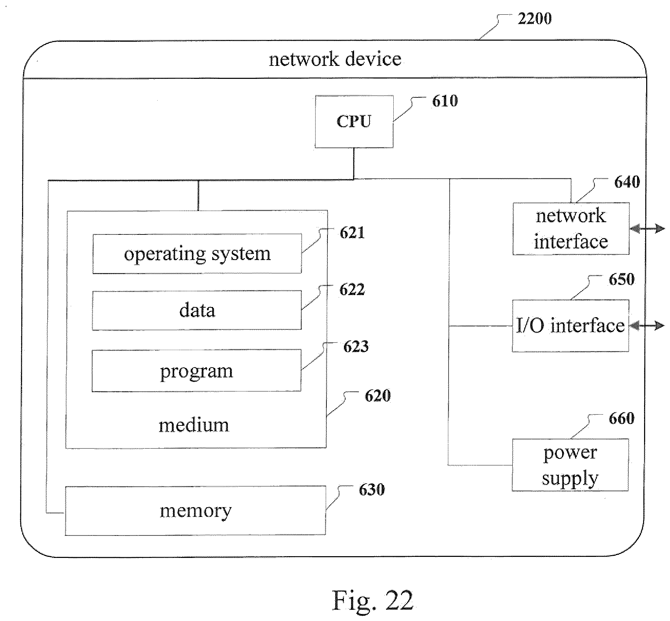

Fig. 22 is a block diagram illustrating a network device according to an exemplary embodiment. As shown in Fig. 22, the network device may be used to perform the method for controlling access to the router described in the above embodiments. The network device may be a high performance computer or computer system or the like in network environment, and may monitor service requests from other computers (clients) and provide a corresponding service.

Preferably, the network device 2200 includes, but is not limited to, the following structure or functions. Preferably, the network device 2200 at least includes one or more central processing unit (CPUs) 610, one or more memories 630, one or more mediums 620 (such as one or more mass memories) configured to store an operating system 621, application programs 622 or data.

The one or more memories 630 and mediums 620 may be temporary or non-temporary. The programs stored in one or more mediums 620 may include one or more modules. Each of the modules may include a set of operation instructions of the network device 2200. Furthermore, the CPU 610 may be configured to communicate with the mediums 620, perform the set of operation instructions and operations on the network device 2200.

The network device may further include one or more power supplies 660, one or more wired or wireless network interfaces 640, one or more keyboard, one or more I/O interfaces 650 and one or more operating systems 621, such as Windows ServerTM, Mac OS XTM, UnixTM, LinuxTM, FreeBSDTM or the like.

In an embodiment, when serving as a router, the network device includes a memory and one or more programs stored in the memory and configured to be executable by one or more processors, wherein the one or more programs include instructions of performing the following operations of:
receiving a first connection request for establishing a connection using a visitor identity, which is transmitted from a first terminal device, and establish a connection to the first terminal with the visitor identity, wherein the first connection request comprises a user identification of the first terminal device;
transmitting an access request for access to the router to a second terminal device with access control permissions, wherein the access request comprises the user identification of the first terminal device;
receiving feedback information which is transmitted from the second terminal device and indicates whether to permit an opposite device to access the router; and
determining whether the first terminal device is permitted to access the router using a host identity, according to the received feedback information.

The memory may further include the following instructions for:
the transmitting of an access request for access to the router, which includes the user identification of the first terminal device, to a second terminal device with access control permissions includes:
   transmitting the access request for access to the router to the second terminal device with access control permissions via a server;
the receiving of feedback information which is transmitted from the second terminal device and indicates whether to permit an opposite device to access the router includes:
   receiving, via the server, feedback information which is transmitted from the second terminal and indicates whether an opposite device is permitted to access the router.

The memory may further include the following instructions of:
before the transmitting of an access request for access to the router to a second terminal device with access control permissions, the method may include:
detecting whether a connection to the second terminal device has been established;
the transmitting of an access request for access to the router to a second terminal device with access control permissions may include:
   directly transmitting an access request for access to the router to the second terminal device when the connection to the second terminal device has been established;
the transmitting of an access request for access to the router to a second terminal device with access control permissions may include:
   transmitting an access request for access to the router to the second terminal device via a server when the connection to the second terminal device has not been established;

The memory may further include the following instructions of:
the receiving of an acknowledgement feedback information, which indicates that the first terminal device is permitted to access the router using the host identity;
the determining whether the first terminal device is permitted to access the router using the host identity, according to the received feedback information includes:
   permitting the first terminal device to access the router using the host identity after the acknowledgement feedback information is received.

The method may further include: transmitting a password to the first terminal device after the first terminal device is permitted to access the router using the host identity; receiving a second connection request for establishing a connection using the host identity transmitted from the first terminal device, which includes the password, and establishing a connection to the first terminal device with the host identity.

In an embodiment, when serving as a server, the network device includes a memory and one or more programs stored in the memory and configured to be performed by one or more processors, wherein the one or more programs include instructions of performing the following operations of:
receiving an access request for access to the router transmitted from the router;
transmitting the access request to a second terminal device;
receiving feedback information which is transmitted from the second terminal device and indicates whether to permit an opposite device to access the router; and
transmitting the feedback information to the router and instructs the router to determine whether to permit a first terminal device to access the router using a host identity according to the received feedback information.

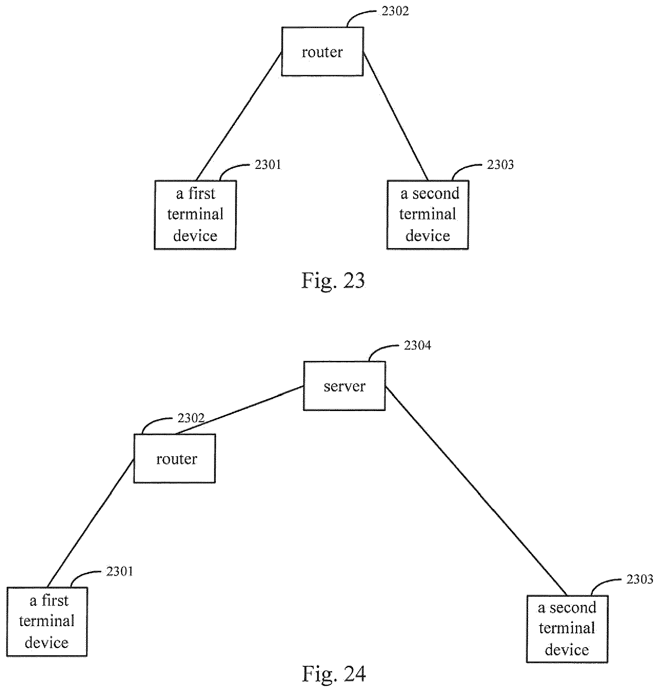

Referring to Fig. 23, the network system in the embodiment includes a first terminal device 2301, a router 2302 and a second terminal device 2303.

The first terminal 2301 is configured to transmit to the router 2302 a first connection request for establishing a connection using a visitor identity, and access to the router 2302 using the visitor identity, wherein the first connection request includes a local user identification. The first terminal 2301 is configured to access the router 2302 using the host identity when getting permission from the router.

The router 2302 is configured to receive the first connection request for establishing a connection using the visitor identity transmitted from the first terminal device 2301, and establish a connection to the first terminal device 2301with the visitor identity, wherein the first connection request includes the user identification of the first terminal device 2301; transmit an access request for access to the router, which includes the user identification of the first terminal device 2301, to a second terminal device 2303 with access control permissions; receive feedback information, which is transmitted from the second terminal device 2303 and indicates whether to permit an opposite device to access the router; and determine whether to permit the first terminal device 2301 to access the router using a host identity, according to the received feedback information.

The second terminal device 2303 is configured to receive the access request for access to the router 2302 including the user identification of the opposite device which requests for access to the router; generate feedback information, which indicates whether to permit the first terminal device 2301 to access the router 2302, according to the user identification; and transmit the generated feedback information.

Referring to Fig. 24, the network system further includes a server 2304. The server 2304 is configured to relay access requests and feedback information between the first and second terminal devices.

In the embodiment, a terminal device serving as a visitor is connected to a router using a visitor identity to obtain a password, and then is connected to the router using a host identity according to the password. In the process, it is not required for the user serving as the visitor to manually input the password, so that operation is simplified and the efficiency of access to the router is improved.

In addition, the mobile terminal described herein may be a hand-held terminal device, such as a mobile phone, a PDA or the like, and thus should not be limited to any specific type of mobile terminal.

In addition, the method described in the present disclosure may be implemented by a computer program executed by CPU. When the computer program is executed by CPU, the above functions described in the method of the present disclosure may be performed.

In addition, the steps in the above method and the units in the system may be realized by a controller, or a computer readable storage device for storing programs used to make the controller realize the above steps or functions of the units.

Herein, it should be understood that the computer readable storage device (such as memory) may be volatile or non-volatile memory device, or a combination thereof. For example, but not limited to, the non-volatile memory device may include a read-only memory (ROM), a programmable read-only memory (PROM), an erasable programmable read-only memory (EPROM), an electrically erasable programmable read-only memory (EEPROM) or a flash memory. The volatile memory device may include a random access memory (RAM) which may serves as an external cache memory. RAM may be realized, for example, but not limited to, in a plurality of manners, such as a DRAM, a SDRAM, a DDR SDRAM, an ESDRAM, a SLDRAM and a DRRAM. The storage device in the present disclosure is intended to include, but not be limited to, these and other kinds of memory.

The person skilled in the art should appreciate that respective exemplary logic, module, circuit and arithmetic steps may be realized as an electronic hardware, a computer program or a combination thereof. In order to clearly illustrate the interchangeability between the hardware and software, respective exemplary logic, module, circuit and arithmetic steps have been described in general. It depends on specific application and design limitation of the whole system that the function is realized as software or hardware. The person skilled in the art may implement the function in various manners with respect to each specific application

Respective exemplary logic, module, circuit and arithmetic steps described herein may be realized by the following parts which are designed to perform the functions described herein: a general-purpose processor, a digital signal processor (DSP), a Application Specific Integrated Circuit (ASIC), a Field Programmable Gate Array (FPGA) or other Programmable Logic Device, a discrete gate or transistor logic, discrete hardware or a combination of thereof, such as, a combination of DSP and a microprocessor, a plurality of microprocessors, a combination of one or more microprocessors and DSP core, or any other such configuration.

Respective exemplary logic, module, circuit and arithmetic steps described herein may be directly included in hardware or a software module performed by the processor or a combination of the both. The software module may be resided in a RAM, a flash memory, a ROM, an EPROM, an EEPROM, a register, a hard disk, a movable disk, a CD-ROM, or any type of storage medium known in the art. The exemplary storage medium is coupled to the processor, so that the processor can read information from the exemplary storage medium or write information to the exemplary storage medium. In an alternative embodiment, the storage medium may be integrated with the processor. The processor and the storage medium may be resided in the ASIC. The ASIC may be resided in the terminal device. In an alternative embodiment, the processor and storage medium may be resided in the terminal device as a discrete.

In one or more exemplary designs, the function may be realized in hardware, software, firmware or a combination thereof. If being realized in software, the function may be stored in or transmitted by a computer readable medium as one or more instructions or codes. The computer readable medium includes a computer storage medium and a communication medium. The communication medium includes any medium which helps the computer program to be transmitted from a location to another location. The storage medium may be any medium which is common to or dedicated to be accessed by the computer. For example, but not limited to, the computer readable medium includes RAM, ROM, EEPROM, CD-ROM or other CD storage device, disk storage device, or other magnetic storage device, or any other medium which is portable or of which storage form is program codes required by instructions or data structure and can be common to or dedicated to be accessed by the computer. In addition, any kinds of connections may be appropriately called as computer readable medium. For example, if coaxial cables, fiber cables, twisted pair, DSL or wireless technology such as IR, radio and microwave are used to transmit software from a website, a server or other remote source, all of the above coaxial cables, fiber cables, twisted pair, DSL or wireless technology such as IR, radio and microwave belong to definition of the medium. As used herein, the disk and CD include compressed disk, laser disk, optical disk, DVD, soft disk, blue light disk, wherein the disk magnetically reproduces data in general and CD optically reproduces data by using laser. A combination of the above should be included within the meaning of computer readable medium.

Although the present disclosure describes exemplary embodiments, it should be noted that various modifications and changes may be performed without departing from the present disclosure. Functions, steps and/or actions described in a particular method are not necessary to be performed in a certain order. In addition, although an element of the present disclosure may be described or realized as an individual, it may be multiple; otherwise it is clearly defined as single.

## Claims

1. A method for controlling access to a network through a router by a first terminal device serving as a visitor, the method comprising the steps of:
receiving (701) a first connection request (1101) for establishing a connection using a visitor identity, which is transmitted from a first terminal device, and
in response to the receiving (701) establishing a connection with limited access bandwidth and access permission to the first terminal device with the visitor identity, wherein the first connection request comprises a user identification of the first terminal device;
transmitting (702) an access request (1102) for access to the router to a second terminal device with access control permissions, wherein the access request comprises the user identification of the first terminal device;
receiving (703) feedback information (1106) which is transmitted from the second terminal device and indicates whether to permit the first terminal device to access the router; and
determining (704) whether the first terminal device is permitted to access the router using a host identity, according to the received feedback information, wherein the feedback information (1106; 1206) is generated at the second terminal device according to an outputted prompt information comprising the user identification if the user identification is not recorded at the second terminal and wherein the feedback information is directly generated from the second terminal device if the user identification is recorded at the second terminal device.

2. The method according to claim 1, wherein,
the transmitting (702) an access request (1102) for access to the router to the second terminal device with access control permissions comprises:
transmitting (902), via a server, the access request (1202,1203) for access to the router to the second terminal device with access control permissions;
the receiving (703) feedback information (1106) which is transmitted from the second terminal device and indicates whether to permit the first terminal device to access the router, comprises:
receiving (903), via the server, feedback information (1206,1207) which is transmitted from the second terminal device and indicates whether to permit the first terminal device to access the router.

3. The method according to claim 1, wherein, before transmitting (702) an access request (1102) for access to the router to a second terminal device with access control permissions, the method comprises:
detecting whether a connection to the second terminal device has been established;
the transmitting an access request for access to the router to a second terminal device with access control permissions comprises:
directly transmitting (702) the access request for access to the router to the second terminal device when the connection to the second terminal device has been established; and
transmitting (902), via a server, the access request for access to the router to the second terminal device when the connection to the second terminal device has not been established.

4. The method according to claim 1, wherein, the received feedback information (1106) is an acknowledgement feedback information which indicates that the first terminal device is permitted to access the router; and
the determining (704) whether to permit the first terminal device to access the router using the host identity according to the received feedback information comprises: permitting the first terminal device to access the router when the acknowledgement feedback information is received;
the method further comprises: transmitting (904) a password to the first terminal device after the first terminal device is permitted to access the router using the host identity; and receiving (905) a second connection request for establishing a connection which is transmitted from the first terminal device and comprises the password, and establishing (906) a connection to the first terminal device.

5. A terminal device (2100), **characterized in that**, the terminal device comprises a memory (120), and one or more programs stored in the memory and configured to be executable by one or more processors (180), the one or more programs comprising instructions of performing the following operations of:
receiving an access request for accessing a router (1001) for unlimited access bandwidth and access permission , which comprises a user identification of a first device requesting for access to the router;
generating feedback information, which indicates whether to permit the first device to access the router (1003), according to the user identification of the first device; and
transmitting (1004) the generated feedback information, wherein the feedback information (1106; 1206) is generated according to an outputted prompt information comprising the user identification if the user identification is not recorded at the terminal device and wherein the feedback information is directly generated if the user identification is recorded at the terminal device.

6. A computer program, which when executing on a processor, performs the method according to any of claims 1 to 4.

## Patentansprüche

1. Verfahren zum Steuern des Zugriffs auf ein Netzwerk über einen Router durch ein erstes Endgerät, das als ein Besucher fungiert, wobei das Verfahren die Schritte umfasst:
Empfangen (701) einer ersten Verbindungsanfrage (1101) zur Herstellung einer Verbindung mithilfe einer Besucheridentität, die von einem ersten Endgerät gesendet wird, und
in Reaktion auf das Empfangen (701) Herstellen einer Verbindung mit begrenzter Zugriffsbandbreite und Zugriffserlaubnis mit dem ersten Endgerät mit der Besucheridentität, wobei die erste Verbindungsanfrage eine Benutzeridentifikation des ersten Endgeräts umfasst;
Senden (702) einer Zugriffsanfrage (1102) für den Zugriff auf den Router an ein zweites Endgerät mit Zugriffssteuerungserlaubnissen, wobei die Zugriffsanfrage die Benutzeridentifikation des ersten Endgeräts umfasst;
Empfangen (703) von Feedbackinformationen (1106), die von dem zweiten Endgerät gesendet werden und anzeigen, ob dem ersten Endgerät erlaubt wird, auf den Router zuzugreifen; und
Bestimmen (704), ob dem ersten Endgerät erlaubt ist, mithilfe einer Host-Identität auf den Router zuzugreifen gemäß der empfangenen Feedbackinformationen, wobei die Feedbackinformationen (1106; 1206) an dem zweiten Endgerät gemäß ausgegebener Aufforderungsinformationen erzeugt werden, die die Benutzeridentifikation umfassen, wenn die Benutzeridentifikation nicht auf dem zweiten Endgerät aufgenommen ist, und wobei die Feedbackinformationen direkt von dem zweiten Endgerät erzeugt werden, wenn die Benutzeridentifikation auf dem zweiten Endgerät aufgenommen ist.

2. Verfahren nach Anspruch 1, wobei
das Senden (702) einer Zugriffsanfrage (1102) für Zugriff auf den Router an das zweite Endgerät mit Zugriffsteuererlaubnissen umfasst:
Senden (902) der Zugriffsanfrage (1202, 1203) für Zugriff auf den Router über einen Server an das zweite Endgerät mit Zugriffsteuererlaubnissen;
das Empfangen (703) von Feedbackinformationen (1106), die von dem zweiten Endgerät übertragen werden und anzeigen, ob dem ersten Endgerät erlaubt wird, auf den Router zuzugreifen, umfasst:
Empfangen (903) von Feedbackinformationen (1206, 1207) über den Server, die von dem zweiten Endgerät gesendet werden und anzeigen, ob dem ersten Endgerät erlaubt wird, auf den Router zuzugreifen.

3. Verfahren nach Anspruch 1, wobei vor dem Senden (702) einer Zugriffsanfrage (1102) für Zugriff auf den Router an ein zweites Endgerät mit Zugriffsteuererlaubnissen das Verfahren umfasst:
Erfassen, ob eine Verbindung mit dem zweiten Endgerät hergestellt wurde;
das Senden einer Zugriffsanfrage für Zugriff auf den Router an ein zweites Endgerät mit Zugriffssteuererlaubnissen umfasst:
direktes Senden (702) der Zugriffsanfrage für Zugriff auf den Router an das zweite Endgerät, wenn die Verbindung mit dem zweiten Endgerät hergestellt wurde; und
Senden (902) der Zugriffsanfrage für Zugriff auf den Router an das zweite Endgerät über einen Server, wenn die Verbindung mit dem zweiten Endgerät nicht hergestellt wurde.

4. Verfahren nach Anspruch 1, wobei die empfangenen Feedbackinformationen (1106) Bestätigungsfeedbackinformationen sind, die anzeigen, dass dem ersten Endgerät erlaubt ist, auf den Router zuzugreifen; und
das Bestimmen (704), ob dem ersten Endgerät erlaubt wird,, mithilfe der Host-Identität auf den Router zuzugreifen, gemäß den empfangenen Feedbackinformationen, umfasst: Erlauben, dem ersten Endgerät, auf den Router zuzugreifen, wenn die Bestätigungsfeedbackinformationen empfangen werden;
wobei das Verfahren ferner umfasst: Senden (904) eines Passworts an das erste Endgerät, nachdem dem ersten Endgerät erlaubt wurde, mithilfe der Host-Identität auf den Router zuzugreifen; und Empfangen (905) einer zweiten Verbindungsanfrage zum Herstellen einer Verbindung, die von dem ersten Endgerät gesendet wird und das Passwort umfasst, und Herstellen (906) einer Verbindung mit dem ersten Endgerät.

5. Endgerät (2100), **dadurch gekennzeichnet, dass** das Endgerät einen Speicher (120) und ein oder mehrere Programme umfasst, die in dem Speicher gespeichert und dazu ausgelegt sind, durch einen oder mehrere Prozessoren (180) ausgeführt zu werden, wobei das eine oder die mehreren Programme Anweisungen zum Durchführen folgender Vorgänge umfassen:
Empfangen einer Zugriffsanfrage zum Zugreifen auf einen Router (1001) für unbegrenzte Zugriffsbandbreite und Zugriffserlaubnis, die eine Benutzeridentifikation eines ersten Geräts umfasst, das den Zugriff auf den Router anfragt;
Erzeugen von Feedbackinformationen, die anzeigen, ob dem ersten Gerät erlaubt wird, auf den Router (1003) zuzugreifen, gemäß der Benutzeridentifikation des ersten Geräts; und
Senden (1004) der erzeugten Feedbackinformationen, wobei die Feedbackinformationen (1106; 1206) gemäß einer ausgegebenen Aufforderungsinformation erzeugt werden, die die Benutzeridentifikation umfasst, wenn die Benutzeridentifikation nicht auf dem Endgerät aufgenommen ist, und wobei die Feedbackinformationen direkt erzeugt werden, wenn die Benutzeridentifikation auf dem Endgerät aufgenommen ist.

6. Computerprogramm, das, wenn es auf einem Prozessor läuft, das Verfahren nach einem der Ansprüche 1 bis 4 durchführt.

## Revendications

1. Procédé pour contrôler l'accès à un réseau par l'intermédiaire d'un routeur par un premier dispositif de terminal servant de visiteur, le procédé comprenant les étapes de :
réception (701) d'une première requête de connexion (1101) pour établir une connexion à l'aide d'une identité de visiteur, qui est transmise à partir d'un premier dispositif de terminal, et
en réponse à la réception (701), établissement d'une connexion avec une bande passante d'accès limitée et une autorisation d'accès au premier dispositif de terminal au moyen de l'identité de visiteur, la première requête de connexion comprenant une identification d'utilisateur du premier dispositif de terminal ;
transmission (702) d'une requête d'accès (1102) pour un accès au routeur à un second dispositif de terminal avec des autorisations de contrôle d'accès, la requête d'accès comprenant l'identification d'utilisateur du premier dispositif de terminal ;
réception (703) d'informations de rétroaction (1106) qui sont transmises à partir du second dispositif de terminal et indiquent si autoriser ou non le premier dispositif de terminal à accéder au routeur ; et
détermination (704) du fait de savoir si le premier dispositif de terminal est ou non autorisé à accéder au routeur à l'aide d'une identité d'hôte, selon les informations de rétroaction reçues, les informations de rétroaction (1106 ; 1206) étant générées au niveau du second dispositif de terminal selon des informations d'invite émises comprenant l'identification d'utilisateur si l'identification d'utilisateur n'est pas enregistrée sur le second dispositif de terminal et les informations de rétroaction étant directement générées à partir du second dispositif de terminal si l'identification d'utilisateur est enregistrée sur le second dispositif de terminal.

2. Procédé selon la revendication 1, dans lequel :
la transmission (702) d'une requête d'accès (1102) pour un accès au routeur au second dispositif de terminal avec des autorisations de contrôle d'accès comprend :
transmettre (902), par l'intermédiaire d'un serveur, la requête d'accès (1202, 1203) pour un accès au routeur au second dispositif de terminal avec des autorisations de contrôle d'accès ;
la réception (703) d'informations de rétroaction (1106) qui sont transmises à partir du second dispositif de terminal et indiquent si autoriser ou non le premier dispositif de terminal à accéder au routeur, comprend :
recevoir (903), par l'intermédiaire du serveur, des informations de rétroaction (1206, 1207) qui sont transmises à partir du second dispositif de terminal et indiquent si autoriser ou non le premier dispositif de terminal à accéder au routeur.

3. Procédé selon la revendication 1, dans lequel, avant la transmission (702) d'une requête d'accès (1102) pour un accès au routeur à un second dispositif de terminal avec des autorisations de contrôle d'accès, le procédé comprend :
détecter si une connexion au second dispositif de terminal a ou non été établie ;
la transmission d'une requête d'accès pour un accès au routeur à un second dispositif de terminal avec des autorisations de contrôle d'accès comprend :
transmettre directement (702) la requête d'accès pour un accès au routeur au second dispositif de terminal lorsque la connexion au second dispositif de terminal a été établie ; et
transmettre (902), par l'intermédiaire d'un serveur, la requête d'accès pour un accès au routeur au second dispositif de terminal lorsque la connexion au second dispositif de terminal n'a pas été établie.

4. Procédé selon la revendication 1, dans lequel les informations de rétroaction (1106) reçues sont des informations de rétroaction d'acquittement qui indiquent que le premier dispositif de terminal est autorisé à accéder au routeur ; et
la détermination (704) du point de savoir si autoriser ou non le premier dispositif de terminal à accéder au routeur à l'aide de l'identité d'hôte selon les informations de rétroaction reçues comprend : autoriser le premier dispositif de terminal à accéder au routeur lorsque les informations de rétroaction d'acquittement sont reçues ;
le procédé comprend en outre : transmettre (904) un mot de passe au premier dispositif de terminal après que le premier dispositif de terminal est autorisé à accéder au routeur à l'aide de l'identité d'hôte ; et recevoir (905) une seconde requête de connexion pour établir une connexion qui est transmise à partir du premier dispositif de terminal et comprend le mot de passe, et établir (906) une connexion au premier dispositif de terminal.

5. Dispositif de terminal (2100), **caractérisé par le fait que** le dispositif de terminal comprend une mémoire (120), et un ou plusieurs programmes stockés dans la mémoire et configurés pour pouvoir être exécutés par un ou plusieurs processeurs (180), le ou les programmes comprenant des instructions pour réaliser les opérations suivantes de :
réception d'une requête d'accès pour accéder à un routeur (1001) pour une bande passante d'accès illimitée et une autorisation d'accès, qui comprend une identification d'utilisateur d'un premier dispositif demandant un accès au routeur ;
génération des informations de rétroaction, qui indiquent si autoriser ou non le premier dispositif à accéder au routeur (1003), selon l'identification d'utilisateur du premier dispositif ; et
transmission (1004) des informations de rétroaction générées, les informations de rétroaction (1106 ; 1206) étant générées selon des informations d'invite émises comprenant l'identification d'utilisateur si l'identification d'utilisateur n'est pas enregistrée sur le dispositif de terminal et les informations de rétroaction étant directement générées si l'identification d'utilisateur est enregistrée sur le dispositif de terminal.

6. Programme d'ordinateur, qui, lorsqu'il est exécuté sur un processeur, réalise le procédé selon l'une quelconque des revendications 1 à 4.
